# FASCICULE DE BREVET EUROPEEN

(11) **EP 3 206 247 B1**
(45) Date de publication et mention de la délivrance du brevet: **06.12.2017**
(21) Numéro de dépôt: 17152949.8
(22) Date de dépôt: 25.01.2017
(51) Int. Cl.: H01M 8/0245, B29B 15/10, H01M 4/86, H01M 4/96, H01M 8/1018

(54) **PROCÉDÉ DE TRAITEMENT HYDROPHOBE D'UN SUBSTRAT EN CARBONE**
VERFAHREN ZUR HERSTELLUNG EINES HYDROPHOBEN KOHLENSTOFFSUBSTRATS
PROCESS OF HYDROPHOBIC TREATMENT OF A CARBON SUBSTRATE

(30) Priorité: 11.02.2016 FR 1651084
(43) Date de publication de la demande: 16.08.2017
(73) Titulaire: COMMISSARIAT À L'ÉNERGIE ATOMIQUE ET AUX ÉNERGIES ALTERNATIVES, 75015 Paris (FR)
(72) Inventeur: THOMAS, Yohann, 38000 GRENOBLE (FR); HEITZMANN, Marie, 38650 SINARD (FR); PAUCHET, Joël, 38410 SAINT MARTIN D'URIAGE (FR); SCHRODER, Maxime, 02620 BUIRONFOSSE (FR)
(74) Mandataire: Cabinet Laurent & Charras

(56) Documents cités:
- JP-A- 2009 170 218
- JP-A- 2012 174 456
- JP-A- 2012 234 742
- US-A1- 2003 157 397
- US-A1- 2015 096 442
- KOLOMYTKIN D O ET AL: "Hydrophobic properties of carbon fabric with Teflon AF 2400 fluoropolymer coating deposited from solutions in supercritical carbon dioxide", RUSSIAN JOURNAL OF PHYSICAL CHEMISTRY B ; FOCUS ON PHYSICS, SP MAIK NAUKA/INTERPERIODICA, DORDRECHT, vol. 5, no. 7, 27 janvier 2012 (2012-01-27), pages 1106-1115, XP035007577, ISSN: 1990-7923, DOI: 10.1134/S1990793111070049

## Description

### DOMAINE DE L'INVENTION

La présente invention concerne un procédé de traitement d'un substrat en carbone avec un copolymère hydrophobe. Ce procédé consiste notamment à imprégner le substrat en carbone avec une solution aqueuse de copolymère hydrophobe, puis à sécher sous vide le substrat en carbone.

Le domaine d'utilisation de la présente invention concerne notamment le stockage de l'énergie, et plus particulièrement les couches de diffusion gazeuse des piles à combustible.

### ETAT ANTERIEUR DE LA TECHNIQUE

De manière générale, l'hydrophobicité d'un substrat en carbone poreux peut être obtenue par imprégnation d'un polymère fluoré de type polytétrafluoroéthylène (PTFE).

Ce type de traitement hydrophobe peut être particulièrement adapté pour certains éléments d'une pile à combustible, notamment une couche de diffusion gazeuse, une électrode à diffusion gazeuse, une couche microporeuse, une couche active ou le support de catalyseur.

Il peut être réalisé par traitement du substrat avec une émulsion de polymère fluoré comme le PTFE, par :
a/ immersion du substrat dans une solution à base de PTFE ;
b/ séchage du substrat imprégné à l'air ;
c/ réitération de étapes a/ et b/ de manière à atteindre la concentration de PTFE désirée ;
d/ frittage du substrat séché à une température supérieure à la température de transition vitreuse du PTFE, en général à environ 350°C.

D'autres alternatives ont été envisagées, par exemple l'utilisation de polyéthersulfone ou de polymères fluorés autres que le PTFE.

Quoi qu'il en soit, ce type de traitement nécessite généralement de fritter le substrat, augmentant ainsi le coût énergétique global.

D'autre part, le polymère hydrophobe peut être réparti de manière non contrôlée, notamment lorsque le substrat est constitué de fibres de carbone. En effet, dans le cas de l'imprégnation d'une solution à base de PTFE, ce dernier se concentre sur les surfaces externes du substrat avec un déficit au coeur de celui-ci.

Le Demandeur a mis au point un procédé permettant de remédier à ces problèmes (homogénéité du traitement + diminution du coût énergétique) grâce à une étape de séchage sous vide et à l'utilisation d'un copolymère fluoré spécifique ne nécessitant pas d'étape de frittage. Le document US 2015/096442 A1 décrit l'imprégnation d'un substrat non-tissé de nanotubes de carbone par le copolymère fluoré amorphe de tétrafluoroéthène et de perfluorométhoxy dioxole disponible commercialement sous le nom de Teflon AF™ dans un solvant fluoré. Le substrat imprégné est destiné à servir de membrane de séparation gaz/liquide.

L'article intitulé "Hydrophobic properties of carbon fabric with Teflon AF 2400 fluoropolymer coating deposited from solutions in supercritical carbon dioxide" de KOLOMYTKIN D. O. ET AL paru dans le RUSSIAN JOURNAL OF PHYSICAL CHEMISTRY B (vol. 5, no. 7, 27 janvier 2012, pages 1106-1115) décrit l'imprégnation d'un substrat tissé de fibres de carbone par du Teflon AF™ à partir d'une solution de CO2 supercritique. Le substrat imprégné est utilisé comme couche de diffusion gazeuse dans une pile à combustible.

Le document US 2003/157397 A1 décrit un substrat de fibres de carbone qui peut être imprégné par du Teflon AF™ et utilisé comme couche de diffusion gazeuse dans une pile à combustible.

### EXPOSE DE L'INVENTION

La présente invention concerne un procédé de traitement hydrophobe dans lequel le polytétrafluoroéthylène (PTFE) conventionnellement utilisé est remplacé par un copolymère fluoré amorphe.

Il ne s'agit pas d'un greffage modifiant un substrat, mais d'un traitement d'imprégnation d'un substrat carboné avec un copolymère fluoré amorphe.

Le terme « amorphe » signifie que le copolymère est dépourvu de structure cristalline. Le copolymère est constitué d'un enchevêtrement de chaînes macromoléculaires qui ne respectent aucun ordre à moyenne et grande distance.

Plus précisément, la présente invention concerne un procédé de traitement d'un substrat en carbone, comprenant les étapes suivantes et successives :
- imprégnation du substrat en carbone avec une solution aqueuse contenant un copolymère fluoré amorphe de tétrafluoroéthène et de perfluorométhoxy dioxole ;
- séchage du substrat en carbone à une pression inférieure à la pression atmosphérique ;
- obtention d'un substrat en carbone imprégné d'un copolymère fluoré.

De manière générale, le substrat en carbone est un substrat poreux, préférentiellement constitué de fibres de carbone. Il peut notamment s'agir d'un non-tissé de fibres de carbone.

Le substrat en carbone présente une porosité avantageusement comprise entre 70 et 95%, plus avantageusement entre 75 et 90%.

La porosité correspond au pourcentage de volume de vide dans le substrat en carbone par rapport à son volume total.

Le substrat en carbone est avantageusement un non-tissé de fibres de carbone ayant une épaisseur comprise entre 25 et 300 micromètres.

Selon l'invention, ce substrat en carbone est traité par imprégnation avec une solution aqueuse de copolymère fluoré.

Le copolymère hydrophobe est un copolymère fluoré amorphe de tétrafluoroéthène et de perfluorométhoxy dioxole. La répartition des monomères est aléatoire.

Le copolymère hydrophobe est avantageusement un copolymère fluoré correspondant au numéro CAS 161611-79-6.

Il présente une viscosité intrinsèque avantageusement comprise entre 50 et 150 mg/L, plus avantageusement entre 80 et 110 mg/L.

Contrairement aux polymères fluorés de type PTFE classiques, le copolymère de tétrafluoroéthène et de perfluorométhoxy dioxole ne nécessite pas d'étape de frittage au-delà de sa température de transition vitreuse. Ainsi, le procédé selon l'invention présente l'avantage de diminuer le coût énergétique du traitement hydrophobe grâce au choix spécifique du copolymère fluoré mis en oeuvre.

Le copolymère mis en oeuvre étant hydrophobe, la solution aqueuse utilisée pour imprégner le substrat en carbone se présente généralement sous la forme d'une émulsion. Le terme « dispersion » peut également être approprié pour désigner cette solution aqueuse.

De manière avantageuse, la solution aqueuse comprend 1 à 60 % de copolymère fluoré, plus avantageusement 5 à 15 %, en poids par rapport au poids de la solution aqueuse.

L'imprégnation du substrat en carbone est avantageusement réalisée à une température comprise entre 15 et 35 °C, plus avantageusement entre 20 et 30 °C.

Le temps d'imprégnation peut être compris entre 1 et 10 minutes, plus avantageusement entre 1 et 5 minutes.

L'imprégnation peut être réalisée sous agitation mécanique de la solution aqueuse ou non, ou par simple immersion. Elle peut également être réalisée sous vide, c'est-à-dire à une pression inférieure à la pression atmosphérique.

Une fois le substrat en carbone imprégné de copolymère fluoré, il est séché à une pression inférieure à la pression atmosphérique.

Comme déjà indiqué, ce procédé ne nécessite pas d'étape de frittage après le séchage. Le séchage est donc réalisé à une température inférieure à la température de transition vitreuse du copolymère amorphe de tétrafluoroéthène et de perfluorométhoxy dioxole.

La température de séchage est avantageusement comprise entre 25 et 95 °C, plus avantageusement entre 30 et 80 °C, et encore plus avantageusement de l'ordre de 55°C.

La durée de séchage est avantageusement comprise entre 15 minutes et 5 heures, plus avantageusement entre 20 minutes et 2 heures, et encore plus avantageusement de l'ordre de 30 minutes.

L'étape de séchage permet d'éliminer l'eau de la dispersion aqueuse.

Comme déjà indiqué, le séchage est réalisé à une pression inférieure à la pression atmosphérique. Lors du séchage, la pression est avantageusement comprise entre 0.1 et 500 hPa, plus avantageusement entre 0.1 et 250 hPa, et encore plus avantageusement entre 0.1 et 50 hPa (1 hPa = 100 Pa).

De manière avantageuse, à l'issue du séchage, le substrat en carbone comprend entre 0.5 et 25% de copolymère fluoré, plus avantageusement entre 1 et 15 %, et encore plus avantageusement entre 2.5 et 10%, en poids par rapport au poids du substrat en carbone traité selon l'invention.

Les étapes d'imprégnation et de séchage peuvent être répétées afin d'atteindre la quantité désirée de copolymère fluoré.

Le substrat obtenu selon la présente invention peut être utilisé dans une pile à combustible à électrolyte membranaire par exemple, avantageusement dans une pile à combustible à membrane échangeuse de protons. Cette pile à combustible peut ainsi comprendre au moins une couche de diffusion gazeuse constituée par ce substrat en carbone.

Le substrat en carbone traité selon l'invention peut également être utilisé dans une batterie, dans un électrolyseur, mais aussi dans des applications de type micro électroniques, semi-conducteurs, ou cellules solaires.

Lors de son utilisation notamment en tant que couche de diffusion gazeuse dans une pile à combustible, le substrat en carbone obtenu selon le procédé de l'invention permet d'améliorer les performances de la pile par rapport aux substrats obtenus par séchage à la pression atmosphérique et par rapport aux substrats traités avec un polymère fluoré autre que le copolymère de tétrafluoroéthène (TFE) et de 2,2,4-trifluoro-5-trifluorométhoxy-1,3-dioxole (TTD ou perfluorométhoxy dioxole).

Sans émettre une quelconque théorie, le Demandeur considère que ces différences de propriétés peuvent être dues à l'étape de séchage sous vide qui permet d'homogénéiser le traitement, c'est-à-dire la répartition du copolymère fluoré, par rapport à un séchage à l'air.

L'invention et les avantages qui en découlent ressortiront mieux de la figure et des exemples suivants donnés afin d'illustrer l'invention et non de manière limitative.

### DESCRIPTION DES FIGURES

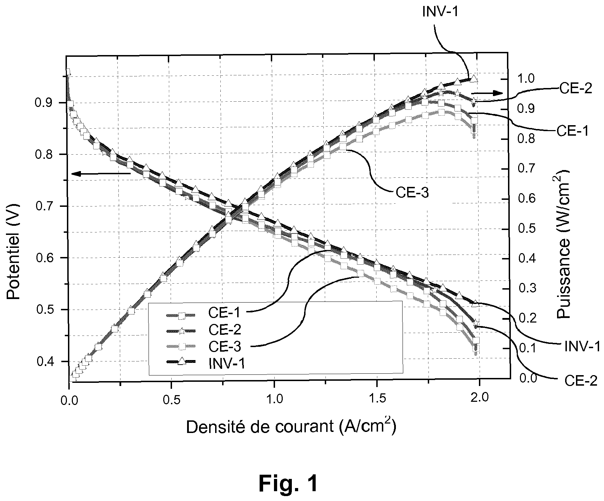

La figure 1 illustre les courbes de polarisation et les courbes de densité de puissance de substrats en carbone ayant subi un traitement hydrophobe.

### EXEMPLES DE REALISATION DE L'INVENTION

### 1/ Préparation de couches de diffusion gazeuse

Un substrat en carbone a été imprégné selon les quatre procédés distincts détaillés dans le tableau 1 ci-dessous. Ce substrat est un non-tissé en carbone pouvant être utilisé comme couche de diffusion gazeuse dans une pile à combustible. Sa référence commerciale est 24AA de la société SGL.

**Tableau 1 : Caractéristiques des procédés de traitement du substrat en carbone.**

| | Polymère hydrophobe | Séchage | Frittage |
|---|---|---|---|
| CE-1 | PTFE | à l'air dans une étuve, à 95°C pendant 30 minutes | Oui |
| CE-2 | PTFE | sous vide, à 55 °C pendant 30 minutes | Oui |
| CE-3 | Hyflon® | à l'air dans une étuve, à 95°C pendant 30 minutes | Non |
| INV-1 | Hyflon® | sous vide, à 55 °C pendant 30 minutes | Non |

Le polymère PTFE est le polytetrafluoroethylene.
Le polymère Hyflon® est un copolymère de tétrafluoroéthène (TFE) et de 2,2,4-trifluoro-5-trifluorométhoxy-1,3-dioxole (TTD).

Quatre couches de diffusion gazeuse ont été préparées par imprégnation d'une solution aqueuse de polymère (PTFE ou Hyflon®). Les polymères étant hydrophobes, ces solutions se présentent généralement sous la forme d'émulsions.

Les couches de diffusion gazeuse traitées avec du PFTE ont été soumises, après séchage, à une étape de frittage à 350°C pendant une durée d'une heure afin de réticuler le PTFE.

Les quatre couches de diffusion gazeuse ainsi obtenues présentent un chargement en agent hydrophobe compris entre 0.5 et 25 % massique.

### 2/ Tests en pile

Les assemblages suivants ont été réalisés :
- couche de diffusion gazeuse ;
- microporeux constitué d'un mélange de noir de carbone, de fibres de carbone et de PTFE ;
- couche catalytique ;
- membrane perfluoro sulfonée ;
- couche catalytique ;
- microporeux constitué d'un mélange de noir de carbone, de fibres de carbone et de PTFE) ;
- couche de diffusion gazeuse.

Chaque assemblage comprend deux couches de diffusion gazeuse identiques obtenues selon l'invention (INV-1) ou selon un contre-exemple (CE-1 ou CE-2 ou CE-3).

Ces assemblages ont été testés à 80°C, à 50% d'humidité relative, sous 1,5 bar d'un mélange stoechiométrique 1,2/2 H₂/air.

La figure 1 illustre les résultats de ces tests. De manière générale, le traitement selon l'invention (polymère Hyflon® + séchage sous vide) permet d'améliorer les performances de la pile.

La figure 1 montre que l'amélioration des performances est due à la double sélection polymère + méthode de séchage.

Sans émettre une quelconque théorie, il est possible que le séchage sous vide permette d'obtenir un traitement plus homogène que le séchage à l'air.

### 3/ Cartographies fluor

La répartition du polymère hydrophobe au sein du substrat en carbone a été analysée par EDX (analyse dispersive en énergie) par détection de la présence du signal du fluor.

De manière générale, les substrats séchés à l'air présentent une accumulation de fluor (polymère hydrophobe) sur les grosses fibres de carbone, sur les parties extérieures.

En revanche, dans les substrats séchés sous vide, le fluor (polymère hydrophobe) est réparti non seulement sur les fibres mais aussi entre les fibres, à l'intérieur de la structure poreuse du substrat.

## Revendications

1. Procédé de traitement d'un substrat en carbone, comprenant les étapes suivantes et successives :
- imprégnation du substrat en carbone avec une solution aqueuse contenant un copolymère fluoré amorphe de tétrafluoroéthène et de perfluorométhoxy dioxole ;
- séchage du substrat en carbone à une pression inférieure à la pression atmosphérique ;
- obtention d'un substrat en carbone imprégné d'un copolymère fluoré.

2. Procédé de traitement d'un substrat en carbone selon la revendication 1, ***caractérisé* en ce que** le substrat en carbone est un non-tissé de fibres de carbone ayant une épaisseur comprise entre 25 et 300 micromètres.

3. Procédé de traitement d'un substrat en carbone selon la revendication 1 ou 2, ***caractérisé* en ce que** la solution aqueuse comprend 1 à 60 % en poids de copolymère fluoré.

4. Procédé de traitement d'un substrat en carbone selon l'une des revendications 1 à 3, ***caractérisé* en ce que** l'imprégnation du substrat en carbone est réalisée à une température comprise entre 15 et 35 °C.

5. Procédé de traitement d'un substrat en carbone selon l'une des revendications 1 à 4, ***caractérisé* en ce que** la température de séchage est comprise entre 25 et 95°C.

6. Procédé de traitement d'un substrat en carbone selon l'une des revendications 1 à 5, ***caractérisé* en ce que** la durée de séchage est comprise entre 15 minutes et 5 heures.

7. Procédé de traitement d'un substrat en carbone selon l'une des revendications 1 à 6, ***caractérisé* en ce que** le séchage est réalisé à une pression comprise entre 0.1 et 500 hPa.

8. Procédé de traitement d'un substrat en carbone selon l'une des revendications 1 à 7, ***caractérisé* en ce que**, à l'issue du séchage, le substrat en carbone comprend 0.5 à 25 % en poids de copolymère fluoré.

9. Procédé de traitement d'un substrat en carbone selon l'une des revendications 1 à 8, ***caractérisé* en ce que**, à l'issue du séchage, le substrat en carbone comprend 1 à 15 % en poids de copolymère fluoré.

10. Procédé de traitement d'un substrat en carbone selon l'une des revendications 1 à 9, ***caractérisé* en ce que**, à l'issue du séchage, le substrat en carbone comprend 2.5 à 10 % en poids de copolymère fluoré.

11. Procédé de traitement d'un substrat en carbone selon l'une des revendications 1 à 10, ***caractérisé* en ce que** la solution aqueuse comprend 5 à 15 % en poids de copolymère fluoré.

12. Procédé de traitement d'un substrat en carbone selon l'une des revendications 1 à 11, ***caractérisé* en ce que** le séchage est réalisé à une pression comprise entre 0.1 et 250 hPa.

13. Procédé de traitement d'un substrat en carbone selon l'une des revendications 1 à 12, ***caractérisé* en ce que** le séchage est réalisé à une pression comprise entre 0.1 et 50 hPa.

14. Procédé de traitement d'un substrat en carbone selon l'une des revendications 1 à 13, ***caractérisé* en ce que** la température de séchage est comprise entre 30 et 80°C.

## Patentansprüche

1. Verfahren zur Herstellung eines hydrophoben Kohlenstoffsubstrats, das die nachstehenden aufeinanderfolgenden Schritte umfasst:
- Imprägnieren des Kohlenstoffsubstrats mit einer wässrigen Lösung, die ein amorphes fluoriertes Copolymer aus Tetrafluorethen und Perfluormethoxy - Dioxol enthält;
- Trocknen des Kohlenstoffsubstrats bei einem Druck niedriger als der Atmosphärendruck;
- Erhalt eines mit einem fluorhaltigen Copolymer imprägnierten Kohlenstoffsubstrats.

2. Verfahren zur Herstellung eines hydrophoben Kohlenstoffsubstrats, gemäß Anspruch 1, ***dadurch gekennzeichnet, dass*** das Kohlenstoffsubstrat ein Kohlenstoff - Faservlies mit einer Dicke zwischen 25 und 300 Mikrometern ist.

3. Verfahren zur Herstellung eines hydrophoben Kohlenstoffsubstrats, gemäß Anspruch 1 oder 2, ***dadurch gekennzeichnet, dass*** die wässrige Lösung 1 bis 60 Gewichts-% fluoriertes Copolymer enthält.

4. Verfahren zur Herstellung eines hydrophoben Kohlenstoffsubstrats, gemäß einem der Ansprüche 1 bis 3, ***dadurch gekennzeichnet, dass*** das Imprägnieren des Kohlenstoffsubstrats bei einer Temperatur zwischen 15 und 35 °C geschieht.

5. Verfahren zur Herstellung eines hydrophoben Kohlenstoffsubstrats, gemäß einem der Ansprüche 1 bis 4, ***dadurch gekennzeichnet, dass*** die Trocknungstemperatur zwischen 25 und 95°C liegt.

6. Verfahren zur Herstellung eines hydrophoben Kohlenstoffsubstrats, gemäß einem der Ansprüche 1 bis 5, ***dadurch gekennzeichnet, dass*** die Trocknungsdauer zwischen 15 Minuten und 5 Stunden liegt.

7. Verfahren zur Herstellung eines hydrophoben Kohlenstoffsubstrats, gemäß einem der Ansprüche 1 bis 6, ***dadurch gekennzeichnet, dass*** das Trocknen bei einem Druck zwischen 0.1 und 500 hPa geschieht

8. Verfahren zur Herstellung eines hydrophoben Kohlenstoffsubstrats, gemäß einem der Ansprüche 1 bis 7, ***dadurch gekennzeichnet, dass*** am Ende des Trocknens das Kohlenstoffsubstrat 0,5 bis 25 Gewichts-% fluoriertes Copolymer enthält.

9. Verfahren zur Herstellung eines hydrophoben Kohlenstoffsubstrats, gemäß einem der Ansprüche 1 bis 8, ***dadurch gekennzeichnet, dass*** am Ende des Trocknens das Kohlenstoffsubstrat 1 bis 15 Gewichts-% fluoriertes Copolymer enthält.

10. Verfahren zur Herstellung eines hydrophoben Kohlenstoffsubstrats, gemäß einem der Ansprüche 1 bis 9, ***dadurch gekennzeichnet, dass*** am Ende des Trocknens das Kohlenstoffsubstrat 2.5 bis 10 Gewichts-% fluoriertes Copolymer enthält.

11. Verfahren zur Herstellung eines hydrophoben Kohlenstoffsubstrats gemäß Anspruch 1 bis 10, ***dadurch gekennzeichnet, dass*** die wässrige Lösung zwischen 5 und 15 Gewichts-% fluoriertes Copolymer enthält.

12. Verfahren zur Herstellung eines hydrophoben Kohlenstoffsubstrats, gemäß einem der Ansprüche 1 bis 11, ***dadurch gekennzeichnet, dass*** das Trocknen bei einem Druck zwischen 0.1 und 250 hPa geschieht.

13. Verfahren zur Herstellung eines hydrophoben Kohlenstoffsubstrats, gemäß einem der Ansprüche 1 bis 12, ***dadurch gekennzeichnet, dass*** das Trocknen bei einem Druck zwischen 0.1 und 50 hPa geschieht.

14. Verfahren zur Herstellung eines hydrophoben Kohlenstoffsubstrats, gemäß einem der Ansprüche 1 bis 13, ***dadurch gekennzeichnet, dass*** die Trocknungstemperatur zwischen 30 und 80°C liegt.

## Claims

1. A method of treating a carbon substrate, comprising the following successive steps of:
- impregnating the carbon substrate with an aqueous solution containing an amorphous fluorinated copolymer of tetrafluoroethylene and of perfluoromethoxy dioxole;
- drying the carbon substrate at a pressure lower than the atmospheric pressure;
- obtaining a carbon substrate impregnated with a fluorinated copolymer.

2. The carbon substrate treatment method of claim 1, wherein the carbon substrate is a carbon fiber nonwoven having a thickness in the range from 25 to 300 micrometers.

3. The carbon substrate treatment method of claim 1 or 2, wherein the aqueous solution comprises from 1 to 60 wt.% of fluorinated copolymer.

4. The carbon substrate treatment method of any of claims 1 to 3, wherein the impregnation of the carbon substrate is performed at a temperature in the range from 15 to 35°C.

5. The carbon substrate treatment method of any of claims 1 to 4, wherein the drying temperature is in the range from 25 to 95°C.

6. The carbon substrate treatment method of any of claims 1 to 5, wherein the drying time is in the range from 15 minutes to 5 hours.

7. The carbon substrate treatment method of any of claims 1 to 6, wherein the drying is carried out at a pressure in the range from 0.1 to 500 hPa.

8. The carbon substrate treatment method of any of claims 1 to 7, wherein, at the end of the drying, the carbon substrate comprises from 0.5 to 25 wt.% of fluorinated copolymer.

9. The carbon substrate treatment method of any of claims 1 to 8, wherein, at the end of the drying, the carbon substrate comprises from 1 to 15 wt.% of fluorinated copolymer.

10. The carbon substrate treatment method of any of claims 1 to 9, wherein, at the end of the drying, the carbon substrate comprises from 2.5 to 10 wt.% of fluorinated copolymer.

11. The carbon substrate treatment method of any of claims 1 to 10, wherein the aqueous solution comprises from 5 to 15 wt.% of fluorinated copolymer.

12. The carbon substrate treatment method of any of claims 1 to 11, wherein the drying is carried out at a pressure in the range from 0.1 to 250 hPa.

13. The carbon substrate treatment method of any of claims 1 to 12, wherein the drying is carried out at a pressure in the range from 0.1 to 50 hPa.

14. The carbon substrate treatment method of any of claims 1 to 13, wherein the drying temperature is in the range from 30 to 80 °C.
